# Europäisches Patentamt

# European Patent Office

# Office européen des brevets

(11) Veröffentlichungsnummer: **0 160 813**
**B1**

## (12) EUROPÄISCHE PATENTSCHRIFT

(45) Veröffentlichungstag der Patentschrift:
**31.08.88**

(21) Anmeldenummer: **85103097.3**

(22) Anmeldetag: **18.03.85**

(51) Int. Cl.⁴: **C 08 L 71/02,** C 08 G 18/66,
C 08 K 5/16, C 08 G 18/14

(54) Verfahren zur Herstellung lagerstabiler Cyanamidlösungen in Polyolen, einphasig homogene Cyanamidlösungen und ihre Verwendung.

(30) Priorität: **31.03.84 DE 3412086**

(43) Veröffentlichungstag der Anmeldung:
**13.11.85 Patentblatt 85/46**

(45) Bekanntmachung des Hinweises auf die Patenterteilung:
**31.08.88 Patentblatt 88/35**

(84) Benannte Vertragsstaaten:
**BE DE FR GB IT**

(56) Entgegenhaltungen:
**EP-A-0 004 618**
**DE-A-2 545 646**

(73) Patentinhaber: **BAYER AG, Konzernverwaltung RP Patentabteilung, D-5090 Leverkusen 1 Bayerwerk (DE)**

(72) Erfinder: **Hajek, Manfred, Dr., Hahnenweg 1, D-5000 Koeln 80 (DE)**
Erfinder: **Müller, Hanns Peter, Dr., Im Kerberich 6, D-5068 Odenthal (DE)**
Erfinder: **Rasshofer, Werner, Dr., Wolfskaul 10, D-5000 Koeln 80 (DE)**

EP 0 160 813 B1

## Beschreibung

Die Erfindung betrifft ein neues Verfahren zur Herstellung von praktisch oligomeren-freien, einphasig lagerstabilen Cyanamidlösungen in Polyolen, vorzugsweise in höhermolekularen Polyether- und/oder Polyesterpolyolen oder Mischungen dieser höhermolekularen Polyole mit niedermolekularen Polyolen, insbesondere Ethylenglykol und Butandiol; sie betrifft weiterhin einphasig lagerstabile Mischungen, enthaltend 0,1 bis 50 Gew.-% monomeren Cyanamids in den Polyolen oder Polyolgemischen sowie die Verwendung der cyanamidhaltigen Polyol- bzw. Polyolgemischlösungen zur Herstellung von Polyurethanen, insbesondere Schaumstoffen und Kunststoffen nach dem RIM-Verfahren.

Es ist bereits bekannt, stickstoffhaltige Verbindungen, z. B. Harnstoff, Cyanamid, Dicyanamid oder Melamin, als Zusätze in Polymeren zu verwenden, um einen besseren Flammschutz derselben, insbesondere in Polyurethan- (Weich)schaumstoffen, zu erzielen (EP-A-46 18, DE-A-2 348 838, DE-A-2 043 917 und FR-A-2 003 124).

Ein Nachteil bei den meisten stickstoffhaltigen Flammschutznitteln ist die Schwerlöslichkeit dieser Produkte in Polyether- oder Polyesterpolyolen. Aus diesem Grunde werden sie üblicherweise in Form von Dispersionen eingesetzt. Nachteile dieser Dispersionen sind ihre geringe Stabilität, ihre Sedimentationsneigung und die hohe Viskosität, wenn der Feststoffanteil gesteigert wird. Dadurch treten z. B. beim kontinuierlichen Arbeiten Schwierigkeiten auf.

Bei der Verwendung von reinem, monomerem, festen Cyanamid treten diese Schwierigkeiten nicht auf, da monomeres Cyanamid in Polyolen gut löslich ist. Reines monomeres, festes Cyanamid ist aber schwer technisch zugänglich und bereitet Schwierigkeiten wegen seiner Lagerstabilität (Di-/Trimerisierung). Technisch und wirtschaftlich sind jedoch wäßrige Lösungen des Cyanamids zugänglich. Wäßrige Cyanamidlösungen zeigen aber bei Eindampfen störende Bildung schwerlöslicher, höhermolekularer Oligomeren, z. B. Dicyandiamid oder höhere Homologe, wie z. B. Melamin. Monomeres Cyanamid muß daher mit Lösungsmitteln, z. B. Ethern, aus diesem Gemisch extrahiert werden, was jedoch zu kostenintensiv ist.

Es wurde nun ein Verfahren zur Herstellung von lagerstabilen Cyanamidlösungen in Polyolen, vorzugsweise auf Basis höhermolekularer Polyether- oder Polyesterpolyole, gefunden, bei dem man von den preiswerten, wäßrigen Cyanamidlösungen ausgehen kann. Überraschenderweise lassen sich Mischungen aus wäßrigen Cyanamidlösungen und Polyolen unter schonenden Bedingungen entwässern, ohne daß es zur Bildung von schwerlöslichen Cyanamidfolgeprodukten, z. B. Dicyandiamid, kommt. Der Restwassergehalt solcher Cyanamid-Polyollösungen ist erstaunlich gering und liegt unter 1 %. Weiter zeigt es sich, daß Cyanamidlösungen in einigen Polyolen eine überraschend geringe Viskosität haben, wenn man zu höheren Konzentrationen übergeht. In vielen Fällen liegt die Viskosität dieser hochprozentigen Lösungen sogar unter der Viskosität des Ausgangspolyols, was sich als besonders vorteilhaft bei maschineller Dosierung dieser Polyollösungen erweist.

Weiterhin hat sich gezeigt, daß nicht nur die Stabilität des monomeren Cyanamids in den Polyollösungen gut ist, sondern daß durch die Gegenwart von Cyanamid eine Art Lösungsvermittlereffekt in nicht homogen vermischbaren Polyolmischungen aus höhermolekularen Polyolen und (damit nicht vollständig mischbaren) niedermolekularen Polyolen, wie insbesondere Ethylenglykol und/oder Butandiol, wirksam wird. Hierdurch werden homogene, einphasige Polyolgemische zugänglich, die sich besser als inhomogene, trübe Polyolgemische zur Polyurethanherstellung eignen.

Gegenstand der Erfindung ist somit ein Verfahren zur Herstellung von Cyanamidlösungen in Polyolen, dadurch gekennzeichnet, daß man

Mischungen aus

A) wäßrigen Cyanamidlösungen, die vorzugsweise 10 bis 55 Gew. -%, besonders bevorzugt 25 bis 50 Gew.-% Cyanamid enthalten und

B) einem Polyol oder mehreren Polyolen mit Molekulargewichten von 62 bis 12 000,

vorzugsweise aus

Ba) höhermolekularen Polyolen mit Molekularge wichten von 400 bis 12 000, insbesondere höhermolekularen Polyether- und/oder Polyesterpolyolen,

insbesondere Polyolgemischen aus

Ba) höhermolekularen Polyolen und

Bb) niedermolekularen Polyolen mit Molekulargewichten von 62 bis 399, insbesondere mit Ba) nicht vollständig mischbaren Polyolen wie Ethylenglykol und/oder Butandiol-1,4,

einsetzt und bei Drücken unterhalb 100 mbar, vorzugsweise unterhalb 50 mbar und besonders bevorzugt unterhalb 30 mbar und niederen Temperaturen, vorzugsweise zwischen 40 und 130°C, vom Wasser befreit und die Mengen an A) und B) so wählt, daß stabile Lösungen von monomerem Cyanamid in den Polyol (gemisch)en erhalten werden, die einen Cyanamidgehalt von 0,1 bis 50 Gew.-% und vorzugsweise einen Restwassergehalt ⩽ 1 Gew.-%, insbesondere (⩽ 0,1 Gew.-% aufweisen.

2

**Ausgangsmaterialien:**

Zur Herstellung der erfindungsgemäßen Gemische geht man von wäßrigen Cyanamidlösungen A) aus, die vorzugsweise 10 bis 55 Gew.-%, bevorzugt 20 bis 50 Gew.-% Cyanamid enthalten. Technisch leicht zugängliche, handelsübliche wäßrige Cyanamidlösungen enthalten zumeist etwa 40 bis 50 Gew.-% Cyanamid und geringe Mengen an (sauren) Stabilisatoren nach dem Stand der Technik, z. B. Mono-) Di-Natriumphosphate oder andere saure Derivate der Phosphorsäure.

Die Polyole B) stellen zwei- und/oder mehrwertige Polyhydroxylverbindungen mit Molekulargewichten von 62 bis 12 000 oder ihre Gemische dar, wobei es sich sowohl um höhermolekulare Polyhydroxylverbindungen Ba) mit Molekulargewichten von 400 bis 12 000, vorzugsweise 800 bis 10 000, besonders bevorzugt 1000 bis 8000, und/oder um niedermolekulare Polyhydroxylverbindungen Bb) vom Molekulargewicht 62 bis 399, (sogenannte Kettenverlängererdiole oder Vernetzer-Polyole) handeln kann.

Die höhermolekularen Polyhydroxylverbindungen Ba) können beispielsweise Polyether-, Polyester- (einschließlich Polylactonester- oder Polycarbonat-), Polythioester-, Polyacetal- oder gesättigte oder ungesättigte Kohlenwasserstoff-Polyole mit 2 bis 8 Hydroxylendgruppen oder auch andere hydroxylhaltige Polymerisate sein, wie sie allgemein für die Polyurethanherstellung bekannt sind. Ihr Schmelzpunkt liegt dabei im allgemeinen unter 60°C, vorzugsweise 40°C und besonders bevorzugt sind es bei Raumtemperatur flüssige Verbindungen. Selbstverständlich können Mischtypen wie Polyetherester, Polyetheracetale, Polyesteramide oder ähnliche verwendet werden. Auch bereits Urethan oder Harnstoffgruppen enthaltende, sogenannte vorverlängerte Polyole, sind verwendbar. Ferner sind Anlagerungsprodukte von Alkylenoxiden an Phenol/Formaldehyd-harze oder Harnstoff/Formaldehyd-harze einsetzbar. Bevorzugt sind Polyester und Polyether, wobei besonders die Polyether eingesetzt werden. Diese Polyether sind beispielsweise Tetramethylenoxid-diole oder seine Mischpolymerisate mit Ethylenoxid und/oder Propylenoxid, insbesondere aber Polyoxyalkylenpolyole auf Basis von Alkyloxiranen, wie Propylenoxid, die bevorzugt weitere Alkylenoxide eingebaut enthalten, vorzugsweise Oxyethylensegmente besitzen.

Diese Polyoxyalkylenpolyole werden durch Addition von Alkyloxiranen wie z. B. Propylenoxid, Epichlorhydrin, 1,2- oder 2,3-Butylenoxid und/oder Styroloxid an zwei- oder mehrwertige Starter wie z B. Wasser , Di- oder Polyole, Ammoniak, Amine, Di- oder Polyamine, Aminoalkohole, Hydrazin oder ähnliche Verbindungen hergestellt. Es können auch Gemische von Alkyloxiranen, z. B. aus Propylenoxid und Epichlorhydrin, zur Herstellung der Polyoxyalkylenpolyole verwendet werden. Bevorzugt werden jedoch solche Polyoxyalkylenpolyole, die mindestens 5 Gew.-% und weniger als 80 Gew.-% an überwiegend oder bzw. ausschließlich an den Kettenenden befindlichen Polyoxyethylensegmenten und somit zumindest anteilweise endständige primäre Hydroxylgruppen besitzen. Insbesondere sind die Polyoxyalkylenpolyole oder ihre Oxyethylenmischpolymeren bevorzugt, welche auf der Basis von Propylenoxid aufgebaut sind und somit Polyoxypropylenglykole, gegebenenfalls mit Oxyethylensegmenten modifiziert, darstellen. Dabei sind solche Polyoxyalkylenpolyole bevorzugt, die, überwiegend oder besonders bevorzugt ausschließlich, endständige Oxyethylenblöcke in den genannten Mengen, vorzugsweise von 10 bis 50 Gew.-% und insbesondere günstig von 12,5 bis 27,5 Gew.-%, bezogen auf die Summe aller im Polyoxyalkylenpolyol vorhandenen Oxyalkyleneinheiten besitzen. Überraschenderweise bilden sich jedoch auch mit reinen Polyoxypropylenpolyolen und Cyanamid und niedermolekularen Diolen wie Ethylenglykol homogene, lagerstabil einphasige Gemische.

Herstellung und Eigenschaften solcher Polyether sind in Ullmanns Encyclopädie der Technischen Chemie, Verlag Chemie, Weinheim, 4. Auflage, Band 19 (1981), im Kapitel Polyalkylenglykole (Seite 31 bis 38) und im Kapitel Polyurethane (Seite 301 bis 341, besonders Seite 304 bis 308) beschrieben und werden auch im Kunststoff-Handbuch, Band VII, Polyurethane, Carl Hanser Verlag, München, (1966), auf Seite 61 bis 75, bzw. ibid. 2. Auflage, (1983), Seiten 42 bis 54, sowie 75 bis 77, abgehandelt.

Als niedermolekulare Poluole Bb) können mindestens zwei Hydroxylgruppen aufweisende Verbindungen des Molekulargewichtsbereichs 62 bis 399, vorzugsweise 62 bis 254, verwendet werden. Im Sinne dieser Erfindung werden insbesondere solche Polyole B) eingesetzt, die ohne die erfindungsgemäße Modifikation mit Salzen in den Polyethern A) keine oder für praktischen Zwecke ungenügende Mischbarkeit zeigen oder deren Mischbarkeit innherhalb der angegebenen Grenze verbessert werden soll.

Die Polyole Bb) sind insbesondere Diole oder Mischungen von Diolen, vorzugsweise geradkettige oder verzweigtkettige (Cyclo)Alkylendiole wie Ethylenglykol, 1,2-Propandiol, 1,3-Propandiol, 3-Chlor-1,2-propandiol, 1,4-Butandiol, 1,4-Dihydroxycyclohexan, 1,4-Dihydroxymethylcyclohexan, 2-Buten-1,4-diol; (cyclo)aliphatische Triole wie Glycerin, Trimehtylolethan, 1,2,6-Hexan-triol, Trimethylolpropan oder Butantriol-1,2,4 und die Propoxylierungs- und Ethyloxylierungsprodukte dieser Triole mit Molekularmassen bis 399, Polyole wie Bisund Trimethylolpropan, Pentaerythrit, sowie ihre Mono- und Oligoethoxylierungsprodukte, ferner die Bispropoxylierungs- oder Bisethoxylierungsprodukte von aromatischen Phenolen, vorzugsweise von Bis-(4-hydroxyphenyl)-dimethylmethan oder Hydrochinon. Weiterhin sind Formosen und Formite mit Molekulargewichten bis 399 geeignete Polyole B).

Bevorzugte Vertreter der Polyole Bb) sind Ethylenglykol und/oder Butandiol-1,4; insbesondere ist aber Ethylenglykol der wichtigste Vertreter der Polyole Bb).

# 0 160 813

**Verfahrensweise:**

Bei dem beanspruchten Verfahren geht man vorzugsweise so vor, daß man in einer Ruhrapparatur ein Gemisch aus Polyol(mischung) und Cyanamidlösung vorlegt und unter kräftigem Rühren und bei vermindertem Druck und mäßig erhöhten Temperaturen das Wasser abdestilliert. Die Entwässerung wird vorzugsweise bei einem Druck unterhalb 100 mbar, vorzugsweise 50 mbar und insbesondere unterhalb 30 mbar bis etwa 0,01 mbar und bei Temperaturen unter 85°C, z. B. zwischen 85 und 35°C, durchgeführt.

Eine Variante des Verfahrens besteht darin, daß man Polyol vorlegt und unter den entsprechenden Temperatur- und Druckbedingungen während der Destillation die berechnete Menge der wäßrigen Cyanamidlösung ständig zudosiert. Diese Verfahrensweise eignet sich insbesondere bei Mischungen, die beim Entwässern zum Schäumen neigen.

Eine weitere Variante des Verfahrens besteht darin, daß man den Entwässerungsschritt in einem ein- oder mehrstufigen Dünnschichtverdampfer durchführt. In diesem Fall kann man bei höherer Temperatur arbeiten, da die thermische Belastung durch den kürzeren Kontakt mit der heißen Zone geringer ist. Bei diesem Verfahren kann der Entwässerungsschritt auch bei Temperaturen zwischen 100 bis etwa 130°C durchgeführt werden. Technisch ist es ebenfalls möglich, die Entwässerung in einem Reaktionsschlangenrohr vorzunehmen, wie sie beispielsweise in der DE-A-2 719 970 beschrieben ist.

Eine beorzugte Form des Verfahrens bei Mischungen aus höher- und niedermolekularen Polyolen liegt darin, daß man die Entwässerung der wäßrigen Cyanamidlösungen in den höhermolekularen Polyolen Ba) vornimmt und das niedermolekulare Polyol Bb), z. B. Ethylenglykol, Butandiol-1,4 oder Neopentylglykol, erst nachträglich in die Cyanamid/ Polyol-Mischung zugibt. Hierdurch vermeidet man ein eventuelles Übergehen von niedermolekularen Polyolen mit dem abdestillierenden Wasser in der Entwässerungsstufe.

Es muß als ausgesprochen überraschend bezeichnet werden, daß man Cyanamidlösungen in Polyolen nach diesem Verfahren herstellen kann, ohne daß störende Mengen Dicyandiamid in fester Form entsteht. Weiter ist es als ausgesprochen überraschend und dadurch wertvoll zu bezeichnen, daß man bei einem Restwassergehalt unter 1 % lagerstabile, hochkonzentrierte Lösungen erhält, die in manchen Fällen, z. B. hohe Cyanamidkonzentrationen von etwa 30 bis 50 %, sogar eine niedrigere Viskosität haben als das Ausgangspolyol.

Das erfindungsgemäße Verfahren ermöglicht so die wirtschaftlichen Herstellung von einphasig stabilen, monomeres Cyanamid in Polyolen enthaltenden Lösungen unter schonenden Reaktionsbedingungen. Homogene Lösungen ergeben bei der Polyurethanbildung bessere Festigkeitseigenschaften als inhomogene Polyolgemische.

Erfindungsgegenstand sind auch Cyanamid-haltige Lösungen, dadurch gekennzeichnet, daß die homogenen, einphasig lagerstabilen, 0,1 bis 50 Gew.-% monomeres Cyanamid (bezogen auf Lösung) in Polyolen B), vorzugsweise Polyoxyalkylenpolyolen, und ≤ Gew.-% Wasser enthaltenden Lösungen, nach dem erfindungsgemäßen Verfahren erhalten werden.

Erfindungsgegenstand sind insbesondere 0,1 bis 50 Gew.-% monomeres Cyanamid in Polyolen B) enthaltende Lösungen, erhältlich nach den beanspruchten Verfahren, wobei die Polyole B) ein Gemisch aus höhermolekularen Polyolen Ba), vorzugsweise Polyoxyalkylenpolyolen, und niedermolekularen Polyolen Bb), vorzugsweise Diolen Bb), darstellen. Insbesondere sind solche Cyanamid-haltigen Polyolgemische Erfindungsgegenstand, wo die höhermolekularen Polyole Ba) und die niedermolekularen Polyole Bb) miteinander nicht voll verträglich (d. h. nicht klar miteinander in allen Verhältnissen mischbar) sind. Ganz besonders wichtige Polyolmischungen B) sind solche, welche als Komponente Ba) Polyoxyalkylenpolyole und als Polyole Bb) Ethylenglykol und/oder Butandiol-1,4 enthalten.

Die Polyol(gemisch)e enthalten im allgemeinen 0,5 bis 15 Mol, vorzugsweise 1 bis 12 und zumeist 1,5 bis 8 Mol, niedermolekularer Polyole Bb) pro Mol höhermolekulares Polyol Ba).

In vielen Fällen sind in den Polyol(gemisch)en Cyanamidmengen von 0,1 bis 10 Gew-%, zumeist sogar 0,1 bis 4,9 Gew.-%, ausreichend, um lösungsvermittelnd zwischen den nicht vollständig mischbaren Komponenten Ba) und Bb) zu wirken.

Gegenstand der Erfindung ist ferner die Verwendung der nach dem erfindungsgemäßen Verfahren erhaltenen, homogenen, einphasig lagerstabilen, monomeres Cyanamid enthaltenden Lösungen als Polyolkomponente bei der Herstellung von Polyurethankunststoffen, insbesondere zur Herstellung von PU-(Hart)Schaumstoffen oder von zelligen Kunststoffen mit geschlossener Oberfläche und gegebenenfalls intergraler Dichteverteilung (hergestellt beispielsweise nach den RIM-Verfahren).

Insbesondere ist Gegenstand der Erfindung die Verwendung der nach dem erfindungsgemäßen Verfahren erhältlichen, monomeres Cyanamid in Mengen von 0,1 bis 50, vorzugsweise 0,1 bis 10 und besonders 0,1 bis 4,9 Gew.-%, in einem Gemisch aus miteinander nicht vollständigen mischbaren, höhermolekularen Polyolen Ba), vorzugsweise Polyoxyalkylenpolyolen, insbesondere auf Basis von Polyoxypropylenpolyolen und seinen Copolymeren mit anderen Alkylenoxiden, und niedermolekularen Polyolen Bb), vorzugsweise Diolen, insbesondere Ethylenglykol oder Butandiol-1,4, enthaltenden, einphasig lagerstabilen Lösung zur Herstellung von PU-(Hart)Schaumstoffen oder von zelligen Kunststoffen mit geschlossener Oberfläche und gegebenenfalls integraler Dichteverteilung, z. B. sogenannten Integralschaumstoffen.

Die erfindungsgemäßen Polyollösungen werden dabei zur Herstellung von Polyurethankunststoffen als alleinige Polyolkomponente oder gegebenenfalls unter Zumischung weiterer höher- und/oder niedermolekularer Polyol- oder Polyaminkomponenten, mit Polyisocyanaten sowie gegebener falls weiteren,

4

gegenüber NCO reaktiven Komponenten und gegebenenfalls unter Zusatz üblicher Hilfs- und Zusatzstoffe (z. B. Katalysatoren, Emulgatoren, Schaumstabilisatoren, Trennmitteln, Treibmitteln, Farbstoffen, Pigmenten oder Füllmitteln) im one shot-Verfahren eingesetzt

Wegen ihres homogenen, einphasigen Lösungscharakters sind die erfindungsgemäßen Polyollösungen bzw. Polyolgemischlösungen dabei vorteilhaft einsetzbar, über Dosiergeräte problemlos förderbar, ergeben gleichmäßige Umsetzung und verbesserte mechanische Eigenschaften, sowie bessere Oberflächenstrukturen ohne Oberflächenstörungen (sogenannte "pin holes").

Da sich offensichtlich das Cyanamid bei den hohen Temperaturen der Polyurethanbildung di- und trimerisiert, trägt es zur Modulversteifung und Verbesserung der thermischen Eigenschaften der PUR-Kunststoffe bei und ergibt auch eine bessere Entformbarkeit der Kunststoffe, ohne daß sich der relativ niedermolekulare Cyanamidzusatz durch Auswandern oder Herauslösen nachteilig bemerkbar macht.

Die erfindungsgemäßen Polyollösungen lassen sich aber auch bei niedrigen Temperaturen, 50 - 70°C mit Diisocyanaten zu NCO Prepolymeren umsetzen, die dann nach den bekannten Verfahren des Standes der Technik allein oder in Mischung mit anderen Polyisocyanaten mit Verbindungen mit reaktiven H-Atomen zu Polyurethan-Kunststoffen verarbeitet werden.

## Beispiel 1

In einem Vierhalskolben, der mit einem intensiv wirkenden Rührer, einem absteigenden Kühler, Tropftrichter und einem Innenthermometer versehen ist, legt man 500 g eines auf Triimethylolpropan gestarteten Mischpolymerisats aus Propylen- und Ethylenoxid (82/78 Mol-%) vor, das eine OH-Zahl von 34 hat und bei 20°C eine Viskosität von 900 mPas aufweist. Man fügt 52 g einer handelsüblichen 50 %-igen wäßrigen Cyanamidlösung (in diesem und in folgenden Beispielen wird jeweils eine durch geringe Mengen an sauren Substanzen stabilisierten Cyanamidlösungen (ca. 50 %ig, Fa. Süddeutsche Kalkstickstoffwerke Trostberg, Oberbayern) verwendet) zu und destilliert anschließend bei einem Druck von 15 mbar und einer Innentemperatur von 50 bis 60°C die entsprechende Wassermenge ab. Anschließend erhöht man die Innentemperatur 45 min auf 75 bis 80°C. Man erhält so eine 5 %-ige Cyanamidlösung im Polyetherpolyol, die noch 0,3 % Wasser enthält und bei 20°C eine Viskosität von 2200 mPas aufweist. Die Lösung ist noch nach 1 Jahr Standzeit klar und ohne Ausscheidung von unlöslichen Di-/Trimerisierungsprodukten.

## Beispiel 2

Nach dem Verfahren, wie im Beispiel 1 ausgeführt, entwässert man eine Mischung aus 500 g des dort angeführten Polyols und 111 g einer 50 % wäßrigen Cyanamidlösung. Man erhält eine 10 %-ige Cyanamidlösung in dem Polyol die noch ca. 0,6 % Wasser enthält und bei 20°C eine Viskosität von 4000 mPas aufweist.

## Beispiel 3

Man verfährt nach der Methode von Beispiel 1 und entwässert so eine Mischung aus 500 g des dort eingesetzten Polyols und 177 g einer 50 %-igen wäßrigen Cyanamidlösung. Man erhält eine 15 %-ige Cyanamidlösung in dem Polyol mit einem Restwassergehalt von 0,6 % und einer Viskosität von 5000 mPas bei 20°C.

## Beispiel 4

Nach der im Beispiel 1 beschriebenen Methode entwässert man eine Mischung aus 500 g des dort angegebenen Polyols und 250 g einer handelsüblichen 50 %-igen wäßrigen Cyanamidlösung. Man erhält nach dem Einengen eine 20 %-ige Cyanamidlösung, die 0,8 % Wasser enthält und eine Viskosität von 5000 mPas aufweist.

## Beispiel 5

Nach der im Beispiel 1 beschriebenen Methode entwässert man eine Mischung aus 500 g des dort beschriebenen Polyols und 333 g einer 50 %-igen wäßrigen Cyanamidlösung. Man erhält nach dem Entwässern eine 25 %-ige Cyanamidlösung in einem Polyol, die noch 0,7 % Wasser enthält und eine Viskosität von 4900 mPas bei 20° C aufweist.

## Beispiel 6

Nach dem im Beispiel 1 beschriebenen verfahren entwässert man eine Mischung aus 500 g des dort beschriebenen Polyols und 1000 g einer 50 %-igen Cyanamidösung, wobei die wäßrige Lösung in 250 g Portionen bei einer Innentemperatur von 60° C und einem Druck von 15 mbar zudosiert wird. Man erhält eine 50 %ige Cyanamidlösung, die einen Restwassergehalt von 0,9 % und eine Viskosität von 250 mPas bei 20° C aufweist.

## Beispiel 7

In einer Apparatur, wie sie im Beispiel 1 beschrieben ist, legt man 500 g eines auf Propylenglykol gestarteten Polypropylenoxids vor, das eine OH-Zahl von 56 hat und bei 20° C eine Viskosität von 360 mPas aufweist. Bei einer Innentemperatur von 60 bis 65°C und einem Druck von 15 bis 20 mbar dosiert man über einen Tropftrichter innerhalb von 2 Stunden 110 g einer 50 %-igen Cyanamidlösung zu. Anschließend hält man Druck und Temperatur konstant, bis kein Wasser mehr abdestilliert Danach erwärmt man noch 30 min auf 80° C. Man erhält eine 10 %-ige Cyanamidlösung in einem Polyol mit einer Viskosität von 2000 mPas und einem Restwassergehalt von 0,3 %.

## Beispiel 8

Nach dem im Beispiel 1 ausgeführten Methode entwässert man eine Mischung aus 500 g des im Beispiel 7 eingesetzten Polyols und 333 g einer 50 %-igen Cyanamidlösung in Wasser. Man erhält eine 25 %-ige Cyanamidlösung in einem Polyol mit einem Restwassergehalt von 0,3 % und einer Visksoität von 2500 mPas bei 20° C.

## Beispiel 9

Man behandelt nach dem in Beispiel 1 beschriebenen Verfahren eine Mischung aus 500 g eines auf Trimethylolpropan gestartetem Mischpolyethers auf der Basis von Propylen- und Ethylenoxid (87 % PO/13 % EO) der eine OH-Zahl von 35 hat und bei 20° C eine Viskosität von 820 mPas aufweist und 333 g einer 50 %-igen wäßrigen Cyanamidlösung.
Man erhält eine 25 %-ige Cyanamidlösung mit einem Restwassergehalt von 0,5 % und einer Viskosität von 400 mPas bei 20° C.

## Beispiel 10

Nach der Methode, wie sie im Beispiel 1 beschrieben ist, behandelt man eine Mischung aus 333 g einer wäßrigen Cyanamidlösung und 500 g eines auf einer Mischung von Trimethylolpropan und Propylenglykol gestarteten Mischpolymerisats aus Ethylen- und Propylenoxid, (10/90 Mol-%) das eine OH-Zahl von 49 hat und eine Viskosität von 550 mPas (20° C) aufweist.
Man erhält eine 25 %-ige Cyanamidlösung in einem Polyol, die noch 0,6 % Wasser enthält und eine Viskosität von 310 mPas bei 20° C aufweist

## Beispiel 11

Eine Mischung aus 333 g einer wäßrigen Cyananidlösung und 500 g eines auf Trimethylolpropan gestarteten Polypropylenethers mit der OH-Zahl von 56 und einer Viskosität von 480 mPas (20° C) läßt man bei einen Druck von 12 mbar und einer Manteltemperatur von 120°C dreimal durch einen 50 cm langen Labor-Dünnschichtverdampfer laufen. Man erhält eine 25 %-ige Cyanamidlösung in dem oben angeführten Polyol mit einen Restwassergehalt von 0,6 % und einer Viskosität von 3000 mPas (20° C).

**Beispiel 12**

Nach dem Verfahren, wie es im Beispiel 1 beschrieben ist, behandelt man eine Mischung aus 333 g einer 50-igen wäßrigen Cyanamid lösung und 500 g eines Polyetherpolyols, das ein auf Trimethylolpropan gestartetes Mischpolymerisat aus Ethylen- und Propylenoxid (25 % EO / 75 % PO) nit einer OH-Zahl von 415 (Molekulargewicht 405) und einer Viskosität von 12 000 mPas, bei 20°C. Man erhält eine 25 %-ige Cyanamidlösung in dem angeführten Polyol, die noch 0,7 % Wasser enthält und bei 22°C eine Viskosität von 700 mPas*hat.

$^x$) bei 20$^o$r

**Beispiel 13**

Man verfährt wie im Beispiel 12 beschrieben, nur erhöht man die Menge der 50 %-igen wäßrigen Cyanamidlösung so daß man eine 35 %-ige Cyanamidlösung in dem Polyetherpolyol mit einem Restwassergehalt von 0,8 % und einer Viskosität von 2400 mPas (20°C) erhält. (Mehrmonatige Lagerstabilität).

**Beispiel 14**

In einer Apparatur, wie sie im Beispiel 1 beschrieben ist, entwässert man eine Mischung aus 250 g einer 50 %-igen wäßrigen Cyanamidlösung und 500 g eines auf Rohr-Zucker und Wasser gestarteten Polyetherpolyols auf der Basis von Propylenoxid, das eine OH-Zahl von 380 und eine Viskosität von 600 mPas (20°C) aufweist. Innerhalb von 8 Stunden destilliert man bei einem Druck von 10 - 15 mbar und einer Innentemperatur von 60 bis 65°C das Wasser bis auf einen Restgehalt von 0,8 % ab. Man erhält eine 20 %-ige Cyanamidlösung in einem Polyetherpolyol mit einer Viskosität von 700 mPas bei 22°C.

**Beispiel 15**

Nach der Methode, wie sie im Beispiel 14 ausgeführt ist, behandelt man eine Mischung aus 428 g einer 50 %-igen wäßrigen Cyanamidlösung und 500 g des im Beispiel 14 eingesetzten Zuckerpolyetherpolyols.
Man erhält eine 30 %-ige Cyanamidlösung, die nur 0,7 % Wasser enthält und bei 22°C eine Viskosität von 300 mPas aufweist.

**Beispiel 16**

Nach dem Verfahren, wie es im Beispiel 14 ausgeführt ist, behandelt man eine Mischung aus 666 g einer 50 %-igen wäßrigen Cyanamidlösung und 500 g des dort angeführten Zuckerpolyetherpolyols. Man erhält eine 40 %-ige Cyanamidlösung in einem Polyetherpolyol, die noch 0,8 % Wasser enthält und eine Viskosität bei 22°C von 270 mPas aufweist.

**Beispiel 17**

Nach der gleichen Methode, wie im Beispiel 14 beschrieben, behandelt man eine Mischung aus 1000 g einer 50 %-igen wäßrigen Cyanamidlösung, die portionsweise zu 500 g des im Beispiel 14 beschriebenen Polyols zugegeben wird. Man erhält eine 50 %-ige Cyanamidlösung in dem Polyetherpolyol mit einem Restwassergehalt von 0,7 % und einer Viskosität von 200 mPas bei 22°C.

**Beispiel 18**

In einer Apparatur, wie sie im Beispiel 1 beschrieben ist, entwässert man eine Mischung aus 428 g einer 50 %-igen wäßrigen Cyanamidlösung und 500 g eines auf Propylenglykol gestarteten Polyetherpolyols auf der Basis von Propylenoxid mit einer OH-Zahl von 515 und einer Viskosität von 95 mPas bei 20°C. Bei Temperaturen zwischen 50 und 65°C, in der Endphase bei 70°C, destilliert man das Wasser bei einem Druck von 10 bis 15 mbar ab. Man erhält so eine 30 %-ige Cyanamidlösung im Polyetherpolyol, die nur 0,6 % Wasser enthält und eine Viskosität von 75 mPas bei 20°C aufweist.

7

**Beispiel 19**

Man verfährt wie im Beispiel 18 beschrieben, nur setzt man 666 g einer 50 %-igen wäßrigen Cyanamidlösung ein. Nach den Einengen erhält man eine 40 %-ige Cyanamidlösung im Polyol, die noch 0,6 % Wasser enthält und eine Viskosität von 45 mPas bei 20°C hat.

**Beispiel 20**

In der Apparatur, wie sie im Beispiel 1 verwendet wird, legt man bei 60°C 250 g einer 50 %-igen wäßrigen Cyanamidlösung und 500 g einer Polyesterpolyolschmelze vor. Der Polyester, der auf der Basis von Adipinsäure und 1,4-Butandiol aufgebaut ist, hat eine OH-Zahl von 56 und schmilzt über 40°C.
Das Wasser wird bei Temperaturen zwischen 50 und 65°C und einem Druck von 15 - 20 mbar abdestilliert. In der Endphase erhöht man die Innentemperatur auf 70 bis maximal 75°C.
Man erhält eine 20 %-ige Cyanamidlösung in dem Polyesterpolyol, die nur 0,4 % Wasser enthält und bei Raumtemperatur fest ist, jedoch leicht aufschmelzbar (ca. 40°C) ist.

**Beispiel 21**

Man verfährt wie im Beispiel 20 beschrieben, nur setzt man 538 g einer 50 %-igen wäßrigen Cyanamidlösung ein. Man erhält eine 35 %-ige Cyanamidlösung im Polyesterpolyol, die nur 0,16 % Wasser enthält und eine Viskosität von 3200 mPas bei 22°C aufweist.

**Beispiel 22**

Nach dem im Beispiel 1 beschriebenen Verfahren entwässert man eine Mischung aus 500 g Glycerin und 250 g einer 50 %-igen wäßrigen Cyanamidlösung. Man erhält eine stabile 20 %-ige Cyanamidlösung in Glycerin, die bei 20°C eine Viskosität von 7000 mPas bei einem Restwassergehalt von ca. 1 % hat.

**Beispiel 23**

Nach dem im Beispiel 1 beschriebenen Verfahren entwässert man eine Mischung aus 500 g Butandiol-1,4 und 250 g einer 50 %-igen wäßrigen Cyanamidlösung. Man erhält eine stabile, 20 %-ige Cyanamidlösung in Butanol, die einen Restwassergehalt von ca. 0,8 % und bei 20°C eine Viskosität von 60 mPas hat.

**Beispiel 25**

Versuche zur Verträglichkeit von Cyanamid-Polyol-Lösungen und Ethylenglykol

a) 80 Gew.-Teile Cyanamid-Polyol-Lösung von Beispiel 4 und 20 Gew.-Teile Ethylenglykol ergeben eine homogene, einphasig lagerstabile (klare) Mischung Viskosität: 1 300 mPas/20°C.
b) Wie bei a) wird eine Mischung aus 80 Gew.-Teilen Cyanamid-Polyol-Lösung von Beispiel 5 mit 20 Gew.-Teilen Ethylenglykol zu stabiler Lösung vermischt, 650 mPas/20°C.
c) Wie in Beispiel a) wird eine 4 : 1 Mischung aus der Cyanamid-Polyol-Lösung von Beispiel 8 und Ethylenglykol hergestellt. Klare, stabile Lösung, 600 mPas/20°C.
d) Wie in Beispiel a) wird eine 4 : 1 Mischung aus der Cyanamid-Polyol-Lösung von Beispiel 9 und Ethylenglykol hergestellt. Klare Lösung, Viskosität 1000 mPas/20°C.
e) Wie in Beispiel a) wird eine 4 : 1 Mischung unter Verwendung einer Cyanamid-Polyol-Lösung von Beispiel 11 hergestellt. Die stabile Lösung hat eine Viskosität von 820 mPas/20°C.
In allen Fällen a) bis e) sind die Ausgangspolyole (ohne Cyanamid) mit Ethylenglykol in diesem Verhältnis nicht klar und vollständig mischbar.

**Beispiel 26**

Verwendung der Cyanamid-haltigen Polyether zur Herstellung von PU-Schaumstoffen.

| A (Vergleich) | B (erfindungs-gemäß) | |
|---|---|---|
| 188 | 95 | Tle. eines Polyethertriols der OH-Zahl 27, wie es durch Addition von zuerst 78 Gew.-% Propylen-oxid und dann 22 Gew.-% Ethylen-oxid an Trimethylolpropan erhal-ten wurde, |
| - | 95 | Tle. einer 20·Gew.-%-igen Lösung von Cyanamid in obigem Polyether |
| 47 | 47 | Tle. Ethylenglykol |
| 0,15 | 0,15 | Tle. UL 1, ein Zinnkatalysator der Witco Corp./USA |
| 1,1 | 1,1 | Tle. Diazabicyclooctan (Kataly-sator DABCO®) |
| 20 | 20 | Tle. Trichlorfluormethan |
| 272 | 296 | Tle, eines Isocyanates des NCO-Gehaltes 24,5 Gew.-%, wie es durch Umsetzung eines Gemisches aus 83 % 4-4'-Diisocyanatodi-phenylmethan, 7 % 2-4'-Diisocya-natodiphenylmethan und 10 % höherfunktionellen Polyisocyana-ten der Diphenylmethanreihe (gesamt NCO-Gehalt 31,8 %) mit Dipropylenglykol erhalten wurde. |

Die Kennzahl bei Versuch A (Vergleichsbeispiel nicht erfindungsgemäß) beträgt 100, bei Versuch B beträgt sie 122 (nur NCO/OH berechnet). Die Polyolkomponenten bei A) sind zweiphasig, bei B) einphasig.

Die Komponenten werden maschinell intensiv miteinander vermischt und das schäumfähige Reaktionsgemisch in eine 60°C warme, geschlossene Stahlform der Innenmaße 20 x 20 x 1 (cm) eingetragen. Als Trennmittel wird P 180 der Fa. Acmos, Bremen eingesetzt. Rührzeit: 9 sec, Formstandzeit: 5 min.

# 0 160 813

**Ergebnisse (Mechanische Werte):**

|                                    | A           | B       |
|------------------------------------|-------------|---------|
| Rohdichte (kg/m³)                  | 1020        | 1012    |
| Shore D-Härte (DIN 53 505)         | 67          | 69 - 70 |
| E-Modul (ASTM-D 790)               |             |         |
| Raumtemperatur                     | 428         | 738     |
| Schlagzähigkeit (kJ/m²)            | nicht gebr. | 138,7   |
| Raumtemperatur/DIN 53 448          |             |         |
|                                    |             |         |
| Zugversuch (DIN 53 504)            |             |         |
| Bruchdehnung (%)                   | 23,8        | 42,3    |
| Zugfestigkeit (MPa)                | 14,3        | 21,4    |

In ähnlicher Weise, jedoch unter geringerer Dosierung in die Form, wurden Schaumstoffkörper der Rohdichte 600 erhalten.

**Brandverhalten:**

Das Brandverhalten wurde an Teilen der Rohdichte 600 an Probekörpern der Maße 12,7 cm x 1,27 cm x 1 cm geprüft. Nach der Vorschrift UL 94 wird für den erfindungsgemäßen Schaumstoff die Stufe V1, für das Vergleichsbeispiel A die Stufe V2 erreicht.

Das Beispiel zeigt, daß nicht nur eine wünschenswerte Verbesserung der mechanischen Eigenschaften von Integralschaumstoffartikeln, sondern auch eine Verbesserung des Brandverhaltens durch die erfindungsgemäße Mitverwendung von Cyanamid erreicht werden kann.

**Patentansprüche**

1. Homogene, einphasig lagerstabile Lösungen von 0,1 - 50 Gew.-% monomerem Cyanamid in Polyolen mit Molekulargewichten von 62 - 12 000, wobei die Lösungen $\leqslant$ 1 Gew.-% Wasser enthalten und praktisch frei von Oligomeren des Cyanamids sind.

2. Lösungen nach Anspruch 1, dadurch gekennzeichnet, daß man als Polyole höhermolekulare Polyole, insbesondere höhermolekulare Polyether- und/oder Polyester-Polyole einsetzt, ggf. gemischt mit niedermolekularen Polyolen, insbesondere mit den höhermolekularen Polyolen nicht vollständig mischbaren Polyolen.

3. Lösungen nach Anspruch 2, dadurch gekennzeichnet daß man als Polyolgemische Gemische aus höhermolekularen Polyolen mit Molekulargewichten von 400 bis 12 000, insbesondere höhermolekularen Polyether- und/oder Polyesterpolyolen, und aus niedermolekularen Polyolen mit Molekulargewichten von 62 bis 399, insbesondere Ethylenglykol und/oder Butan-diol-1,4, einsetzt.

4. Lösungen nach Ansprüchen 1 - 3, dadurch gekennzeichnet, daß die Polyolgemische 0,5 bis 15 Mole an niedermolekularen Polyolen pro Mol an höhermolekularen Polyolen enthalten.

5. Lösungen nach Ansprüchen 1 - 4, dadurch gekennzeichnet, daß sie monomeres Cyanamid in Mengen von 0,1 bis 4,9 Gew.-% enthalten.

6. Verfahren zur Herstellung der Lösungen nach Ansprüchen 1 - 5, dadurch gekennzeichnet, daß man

A) wäßrige Cyanamidlösungen, die vorzugsweise 10 bis 55 Gew.-%, besonders bevorzugt 25 bis 50 Gew.-% monomeres Cyanamid enthalten, mit

B) einem Polyol oder mehreren Polyolen mit Molekulargewichten von 62 bis 12 000 mischt und bei Drücken unterhalb 100 mabr, vorzugweise unterhalb 50 mbar und besonders bevorzugt unterhalb 30 mbar und Temperaturen zwischen 35 und 130°C so lange entwässert, bis der Restwassergehalt $\leqslant$ 1 Gew.-% beträgt.

7. Verfahren nach Anspruch 6, dadurch gekennzeichnet, daß man die Gemische bei Temperaturen unter 85°C und Drücken unterhalb von 50 mbar entwässert.

8. Verfahren nach Anspruch 6 oder 7, dadurch gekennzeichnet, daß man die wäßrige Cyanamidlösung zunächst mit höhermolekularen Polyolen mischt, entwässert und anschließend mit einem niedermolekularen Polyol mischt.

9. Verwendung der Lösungen nach Ansprüchen 1 - 5 als Polyolkomponente bei der Herstellung von Polyurethankunststoffen, insbesondere zur Herstellung von PU-(Hart) Schaumstoffen oder von zelligen Kunststoffen mit geschlossener Oberfläche und gegebenenfalls integraler Dichteverteilung.

10. Verwendung der Lösungen nach Ansprüchen 1-5 zum Flammfestausrüsten von Poolyurethankunststoffen.

**Claims**

1. Homogeneous, monophasic solutions which are stable in storage of from 0.1 to 50 % by weight of monomeric cyanamide in polyols with molecular weights of from 62 to 12,000, which solutions contain $\leqslant$ 1 % by weight of water and are virtually free from oligomers of cyanamide.

2. Solutions according to claim 1, characterised in that the olyols used are relatively high molecular weight polyols, in particular relatively high molecular weight polyether and/or polyester polyols, optionally mixed with low molecular weight polyols, in particular with polyols which are not completely miscible with the relatively high molecular weight polyols.

3. Solutions according to claim 2, characterised in that the polyol mixtures used are mixtures of relatively high molecular weight polyols having molecular weights of from 400 to 12,000, in particular relatively high molecular weight polyether and/or polyester polyols, and low molecular weight polyols having molecular weights of from 62 to 399, in particular ethylene glycol and/or butane-1,4-diol.

4. Solutions according to claims 1 to 3, characterised in that the polyol mixtures contain from 0.5 to 15 mol of low molecular weight polyols per mol of relatively high molecular weight polyols.

5. Solutions according to claims 1 to 4, characterised in that they contain monomeric cyanamide in quantities of from 0.1 to 4.9 % by weight.

6. Process for the preparation of solutions according to claims 1 to 5, characterised in that:

A) aqueous cyanamide solutions, preferably containing from 10 to 55 % by weight, most preferably from 25 to 50 % by weight of monomeric cyanamide are mixed with:

B) a polyol or several polyols having molecular weights of from 62 to 12,000 and the mixtures are dehydrated at pressures below 100 mbar, preferably below 50 mbar, most preferably below 30 mbar, and at temperatures from 35 to 130°C until the residual water content is $\leqslant$ 1 % by weight.

7. Process according to claim 6, characterised in that the mixtures are dehydrated at temperatures below 85°C and pressures below 50 mbar.

8. Process according to claim 6 or 7, characterised in that the aqueous cyanamide solution is first mixed with relatively high molecular weight polyols and dehydrated and is then mixed with a low molecular weight polyol.

9. Use of the solutions according to claims 1 to 5 as polyol components for the preparation of polyurethane plastics, in particular for the preparation of PU(rigid) foams or cellular plastics with a closed surface and optionally integral density distribution.

10. Use of the solutions according to claims 1 to 5 for flameproofing polyurethane plastics.

**Revendications**

1. Solutions homogènes stables à la conservation en une phase et constituées de 0,1 à 50 % en poids de cyanamide monomère dans des polyols ayant des poids moléculaires de 62 - 12.000, ces solutions contenant $\leqslant$ 1 % en poids d'eau, tandis qu'elles sont pratiquement exemptes d'oligomères du cyanamide.

2. Solutions selon la revendication 1, caractérisées en ce que, comme polyols, on utilise des polyols de poids moléculaire très élevé, en particulier, des polyéther-polyols et/ou des polyester-polyols de poids moléculaire très élevé éventuellement en mélange avec des polyols de faible poids moléculaire, en particulier, avec des polyols qui ne sont pas complètement miscibles aux polyols de poids moléculaire très élevé.

3. Solutions selon la revendication 2, caractérisées en ce que, comme mélanges de polyols, on utilise des mélanges de polyols de poids moléculaire très élevé ayant des poids moléculaires de 400 a 12.000, en particulier, des polyéther-polyols et/ou des polyester-polyols de poids moléculaire très élevé, ainsi que de polyols de faible poids moléculaire ayant des poids moléculaires de 62 à 399, en particulier, l'éthylène-glykol et/ou le butane-diol-1,4.

4. Solutions selon les revendications 1 à 3, caractérisées en ce que les mélanges de polyols contiennent 0,5 à 15 moles de polyols de faible poids moléculaire par mole de polyols de poids moléculaire très élevé.

5. Solutions selon les revendications 1 à 4, caractérisées en ce qu'elles contiennent du cyanamide monomère en quantités de 0,1 à 4,9 % en poids.

6. Procédé de préparation des solutions selon les revendications 1 à 5, caractérisé en ce qu'on mélange:

A) des solutions aqueuses de cyanamide contenant, de préférence, 10 à 55 % en poids et, de manière particulièrement préférée, 25 à 50 % en poids de cyanamide monomère, avec:

B) un polyol ou plusieurs polyols ayant des poids moléculaires de 62 à 12.000, et on les déshydrate sous des pressions inférieures à 100 mbars, de préférence, inférieures à 50 mbars et, de manière particulièrement préférée, inférieures à 30 mbars, ainsi qu'à des températures se situant entre 35 et 130°C, jusqu'à ce que la teneur résiduelle en eau soit $\leqslant$ 1 % en poids.

7. Procédé selon la revendication 6, caractérisé en ce qu'on déshydrate les mélanges à des températures inférieures à 85°C et sous des pressions inférieures à 50 mbars.

8. Procédé selon la revendication 6 ou 7, caractérisé en ce qu'on mélange la solution aqueuse de cyanamide tout d'abord avec des polyols de poids moléculaire très élevé, on la déshydrate, puis on la mélange avec un polyol de faible poids moléculaire.

9. Utilisation des solutions selon les revendications 1 à 5 comme composant polyol lors de la préparation de matières synthétiques de polyuréthanes, en particulier, pour la préparation de mousses (dures) de polyuréthanes ou de matières synthétiques cellulaires à surface fermée et éventuellement à répartition intégrale de densité.

10. Utilisation des solutions selon les revendications 1 à 5 en vue de conférer un apprêt ignifuge aux matières synthétiques de polyuréthanes.